# EUROPÄISCHE PATENTSCHRIFT

(11) **EP 2 877 331 B1**
(45) Veröffentlichungstag und Bekanntmachung des Hinweises auf die Patenterteilung: **28.09.2016**
(21) Anmeldenummer: 13729721.4
(22) Anmeldetag: 18.06.2013
(51) Int. Cl.: B29C 45/14

(54) **EINSTÜCKIG MEHRKOMPONENTIG SPRITZGEGOSSENE BÜRSTE UND VERFAHREN ZU IHRER HERSTELLUNG**
MULTIINJECTION MOLDED ONE-PIECE BRUSH AND PROCESS FOR ITS MANUFACTURING
BROSSE MONOBOQUE EN PLUSIEURS PARTIES FABRIQUER PAR MOULAGE D'INJECTION EN PLUSIEURS ÉTAPES ET PROCÉDÉ POUR LA FABRICATION LAMÊME

(30) Priorität: 28.06.2012 DE 102012105714
(43) Veröffentlichungstag der Anmeldung: 03.06.2015
(73) Patentinhaber: GEKA GmbH, 91572 Bechhofen (DE)
(72) Erfinder: WOLFSGRUBER, Dieter, 91595 Burgoberbach (DE)
(74) Vertreter: Misselhorn, Hein-Martin
(86) Internationale Anmeldenummer: PCT/EP2013/062652
(87) Internationale Veröffentlichungsnummer: WO 2014/001156

(56) Entgegenhaltungen:
- EP-A1- 2 030 524
- DE-U1-202011 002 793
- US-A1- 2003 163 884
- US-A1- 2005 172 439

## Beschreibung

Die Erfindung betrifft eine Bürste nach dem Oberbegriff des Anspruchs 1. Eine solche Bürste wird vorzugsweise als Kosmetik-Applikator und idealerweise als Mascara-Applikator eingesetzt, auch im Rahmen der Erfindung, die sich speziell auch hierauf bezieht.

Gattungsbildende Bürsten und Verfahren zu ihrer Herstellung sind aus der US2005/172439, DE 20 2011 002793, EP2030524 und US 2003/163884 bekannt.

Klassischerweise wurden Kosmetik-Applikatoren in Gestalt von Bürsten lange Zeit ausschließlich so hergestellt, dass Natur- oder Kunstfasern zwischen zwei zunächst noch geraden Drähten eingelegt wurden. Im Anschluss daran wurden diese Drähte verdrillt und hielten die zwischen sie eingelegten Fasern in einer bestimmten Konfiguration fest. Man bezeichnet solche Bürsten gemeinhin als Drahtkernbürsten.

Drahtkernbürsten haben viele Vorteile, sie weisen jedoch einen entscheidenden Nachteil auf, nämlich den, dass sich der Abstand der einzelnen Borsten des Borstenbesatzes voneinander nur innerhalb von sehr engen Bereichen variieren lässt. Es ist praktisch unmöglich, einen Applikator herzustellen, der rundum und entlang der Längsrichtung einen wirklich gleichmäßigen Borstenbesatz aufweist. Stattdessen ist es bei Drahtkernbürsten stets so, dass der Besatz entlang einer Schraubenlinie, die der Verdrillung der Drähte folgt, am dichtesten ist, während er in anderen Bereichen weniger dicht ist.

Nachdem immer filigranere Spritzgussformen hergestellt werden konnten, werden seit etwa zehn Jahren zunehmend gespritzte Bürsten hergestellt, auch solche, die dann als Mascara-Applikator Verwendung finden. Es handelt sich hierbei um einstückige Bürsten, bei denen der Borstenträger und die davon abstehenden Borsten aus ein- und demselben Material gefertigt sind und zwar im Regelfall einstückig durch Spritzguss.

In der Praxis besteht in vielen Fällen das Bedürfnis, den Borstenträger einerseits und die an ihm befestigten Borsten andererseits aus unterschiedlichen Materialien herzustellen, die jeweils den individuellen Anforderungen Rechnung tragen. So ist es beispielsweise sinnvoll, den Borstenträger aus einem härteren Material zu fertigen, um ihm die erforderliche Steifigkeit zu verleihen, während es andererseits sinnvoll ist, die Borsten aus einem im Vergleich zum Material des Borstenträgers weicheren Material zu fertigen, um ihnen auf diese Art und Weise die gewünschte Flexibilität zu verleihen und vor allen Dingen zu verhindern, dass die Borsten haptisch den Eindruck eines "Piksens" vermitteln.

Um dieses Bedürfnis befriedigen zu können, ist die Moltrusions-Technik entwickelt worden, die von dem europäischen Patent EP 1 507 640 B1 beschrieben wird. Die so genannte Moltrusions®-Technik beruht auf dem Gedanken, den Borstenträger als dünnwandiges Rohr auszuführen, der aus dem hierfür idealerweise zu verwendenden Material gefertigt ist. Dieses Rohr wird in die Spritzgussform, mit deren Hilfe die Borsten erzeugt werden, eingelegt und von innen her ausgespritzt.

Dadurch, dass die später die Borsten ausbildende Kunststoffschmelze zunächst in das Innere des Borstenträgerrohrs eingespritzt wird und dann die Borsten ausbildet, indem die Außenwand des Borstenträgerrohrs durchbrochen wird, können Borsten hergestellt werden, die ganz hervorragende Festigkeitseigenschaften haben, da die Kunststoffmoleküle durch dieses Verfahren eine festigkeitssteigernde Ausrichtung erfahren.

Mit Hilfe der Moltrusions-Technik kann jedoch nur eine Art von Borsten hergestellt werden. Die Herstellung von unterschiedlichen Borsten an der gleichen Bürste mit jeweils der Moltrusions-Technik ist bisher nicht möglich.

Dem gegenüber ist es die Aufgabe der Erfindung, eine Bürste anzugeben, die ein Borstenfeld aus unterschiedlichen, spritzgegossenen Borsten aufweist, die rationell hergestellt werden können und jeweils verbesserte Festigkeitseigenschaften aufweisen, verglichen mit konventionellen spritzgegossenen Borsten.

Es ist weiterhin Aufgabe der Erfindung, ein entsprechendes Verfahren anzugeben.

Die Lösung dieser Aufgabe erfolgt durch eine Bürste mit einem Borstenträgerrohr und einem Besatz aus spritzgegossenen Borsten, die an dem Borstenträgerrohr festgelegt sind, sich durch die Außenwand des Borstenträgerrohrs hindurch erstrecken und mit einem Kunststoffkörper eins sind, der zumindest einen Teil des Inneren des Borstenträgerrohrs ausfüllt. Die erfindungsgemäße Bürste zeichnet sich dabei dadurch aus, dass das Borstenträgerrohr in seinem Inneren mindestens eine Trennwand aufweist, die das Innere des Borstenträgerrohrs in voneinander getrennte Kammern unterteilt.

Eine solche Kammerung des Borstenträgerrohrs erlaubt es, gleichzeitig mehrere Kunststoffmassen in das Innere des Borstenträgerrohrs einzuspritzen, die sich zunächst nicht miteinander mischen. Vielmehr bleibt jede der Kunststoffschmelzen hinreichend lange in der ihr zugeordneten Kammer, um die Außenwand des Borstenträgerrohrs zu durchbrechen und auf diese Art und Weise in die für sie bestimmten borstenbildenden Kavitäten einzutreten. Somit ist es möglich, Bürsten herzustellen, die ein Borstenfeld besitzen, welches aus unterschiedlichen Borsten besteht, die alle mit Hilfe der Moltrusions-Technik hergestellt worden sind und daher optimierte Eigenschaften aufweisen. Vorzugsweise weist das Borstenträgerrohr in seinem Inneren mehrere Trennwände auf, die das Innere des Borstenträgerrohrs in mehr als zwei voneinander getrennte Kammern unterteilen. Auf diese Art und Weise lassen sich Bürsten mit einem Borstenbesatz herstellen, der aus mehr als zwei unterschiedlichen, aber jeweils durch die Moltrusions-Technik hergestellten Arten von Borsten besteht.

Vorzugsweise ist die Dicke der mindestens einen Trennwand größer als die Dicke der Außenwand des Borstenträgerrohrs. Dies führt dazu, dass die zumindest eine Trennwand die unterschiedlichen Kunststoffmassen lange genug trennt, nämlich vorzugsweise solange, bis der überwiegende Teil der jeweiligen borstenbildenden Kavitäten bestimmungsgemäß mit der ihm zugeordneten Kunststoffmasse ausgefüllt ist und daher eine nach einem eventuellen Kollabieren der Trennwand stattfindende Vermischung der unterschiedlichen Kunststoffmassen im Wesentlichen nur innerhalb des Borstenträgerrohrs stattfindet.

Idealerweise werden zumindest zwei der durch mindestens eine Trennwand abgegrenzten Kammern nicht nur mit unterschiedlich eingefärbtem Kunststoffmaterial ausgespritzt, sondern mit Kunststoffmaterialien, deren Anwendungseigenschaften sich unterscheiden, wenn diese Kunststoffmaterialien jeweils Borsten ausbilden. Auf diese Art und Weise wird es beispielsweise möglich, Bürsten mit einem einheitlichen Borstenfeld zu schaffen, das aber auf der einen Seite härtere und auf der anderen Seite weichere Borsten aufweist. Eine solche Ausgestaltung ist zum Beispiel für einen Mascaraapplikator äußerst vorteilhaft. Es ist dann beispielsweise möglich, die Seite des Borstenfeldes, das aus den weicheren bzw. flexibleren Borsten gebildet wird, zum Auftragen der Mascaramasse zu verwenden, während danach der Applikator um einen bestimmten Winkel gedreht werden kann, um mit dem Teil des Borstenfeldes, der aus den härteren bzw. weniger flexibleren Borsten gebildet wird, die Wimpern zu separieren bzw. zu "curlen".

Vorzugsweise schließt sich an die Stirnseite des Borstenträgerrohrs ein Kupplungsabschnitt an, mit dessen Hilfe das Borstenträgerrohr an einem Stiel oder Griff festgesetzt werden kann. Im Idealfall ist der Kupplungsabschnitt ein integraler Bestandteil eines Kunststoffkörpers, der auch mindestens eine der mehreren Kammern ausfüllt. Eine solche Ausgestaltung erlaubt es, den Kupplungsabschnitt aus der gleichen Kunststoffmasse zu fertigen wie zumindest ein Teil der Borsten. Auf diese Art und Weise kann der Kupplungsabschnitt beim Spritzen der Borsten gleich mit angeformt werden.

Es kann vorteilhaft sein, das Borstenträgerrohr als einen Abschnitt eines endlos stranggepressten Profils auszubilden, was eine sehr rationelle Herstellung des Borstenträgers erlaubt.

Verfahrensmäßig wird die erfindungsgemäße Bürste dadurch hergestellt, dass zunächst ein Borstenträgerrohr aus einem ersten Kunststoff gefertigt wird. Dieses Borstenträgerrohr weist mindestens zwei unterschiedliche Kammern auf. In einem zweiten Herstellungsschritt, der sich an die Herstellung des Borstenträgerrohrs anschließt, werden mindestens zwei durch eine Trennwand im Inneren des Borstenträgerrohrs gebildete Kammern mit Kunststoff ausgespritzt. Dabei wird der Einspritzdruck jeweils so hoch eingestellt, dass der zum Ausspritzen der jeweiligen Kammer eingesetzte Kunststoff die Außenwand des Borstenträgerrohrs dort lokal durchbricht, wo sich auf der Außenseite eine zunächst noch leere borstenbildende Kavität anschließt, die sodann durch den Kunststoffstrahl, der den Durchbruch in der Außenwand des Borstenträgerrohrs von innen her passiert, ausgefüllt wird.

Idealerweise werden in eine erste und mindestens eine zweite durch eine Trennwand in Längsrichtung voneinander getrennte Kammer gleichzeitig und unter dem gleichen Druck von einer ersten Stirnseite des Borstenträgerrohrs her unterschiedliche Kunststoffmassen eingespritzt.

Das Einspritzen unter im Wesentlichen dem gleichen Druck stellt sicher, dass die Trennwand oder die mehreren Trennwände lange genug ihre Funktion erfüllen. Das heißt, die Trennwand oder die Trennwände werden von den Kunststoffmassen, die sie voneinander getrennt halten, entweder bis zum Abschluss des Spritzgussvorgangs nicht durchbrochen oder erst zu einem Zeitpunkt durchbrochen, zu dem die borstenbildenden Kavitäten mit der ihnen bestimmungsgemäß zugeordneten Kunststoffmasse überwiegend ausgefüllt sind, so dass sich die zunächst voneinander getrennten Kunststoffmassen im Wesentlichen nur im Inneren des Borstenträgerrohrs miteinander vermischen.

Weitere Vorteile, Ausgestaltungsmöglichkeiten und Wirkungsweisen der Erfindung werden anhand der mit Hilfe der Figuren beschriebenen Ausführungsbeispiele erkennbar.

Es zeigen:
Figur 1: ein erstes Ausführungsbeispiel der Erfindung mit einem Borstenträgerrohr, das durch eine Trennwand in zwei Kammern unterteilt wird.
Figur 2: eine Ausführungsform, bei der das Borstenträgerrohr durch mehrere Trennwände in insgesamt vier Kammern unterteilt wird.
Figur 3: einen Längsschnitt durch ein Borstenträgerrohr gemäß Figur 1, das in eine entsprechende Spritzgussform eingelegt ist, bei Beginn des Einschießens der beiden unterschiedlichen Kunststoffmassen.
Figur 4: einen Längsschnitt durch ein Borstenträgerrohr gemäß Figur 1, das in eine entsprechende Spritzgussform eingelegt ist, nach dem vollständigen Einspritzen der beiden unterschiedlichen Kunststoffmassen.

### Figur 5: eine fertige, erfindungsgemäße Bürste

Die Erfindung betrifft ganz allgemein Bürsten mit spritzgegossenen Borsten. Ein spezielles Verwendungsgebiet der Erfindung ist die Herstellung borstenbesetzter Applikatoren für das Auftragen von Kosmetika. Insbesondere kommt die Erfindung für die Herstellung von Mascaraapplikatoren mit spritzgegossenen Borsten zur Anwendung. Unter Borsten im Sinne der Erfindung werden vorzugsweise solche stabartigen Gebilde verstanden, deren Länge mindestens 5 x, vorzugsweise mindestens 10 x größer ist als deren maximale Dicke senkrecht zu ihrer Längsachse.

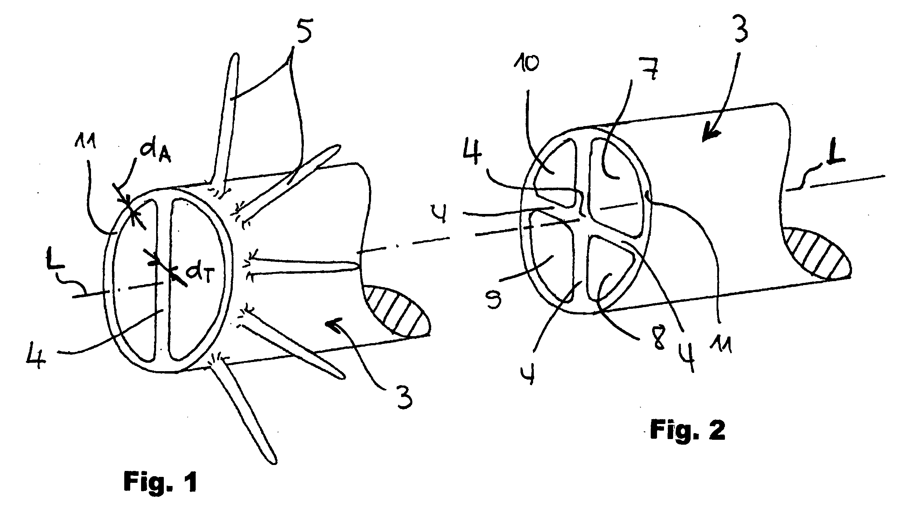

Die Figur 1 zeigt ein erstes Ausführungsbeispiel der Erfindung, ausschnittweise.

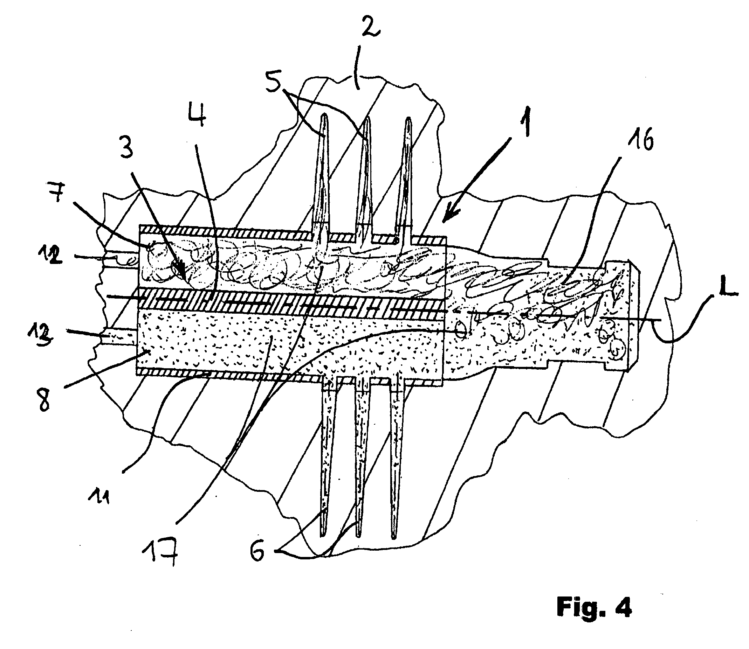

Was gezeigt wird, ist der vordere Bereich eines borstenbesetzten Applikators 1, wie ihn beispielsweise die Figur 4 vollständig darstellt.

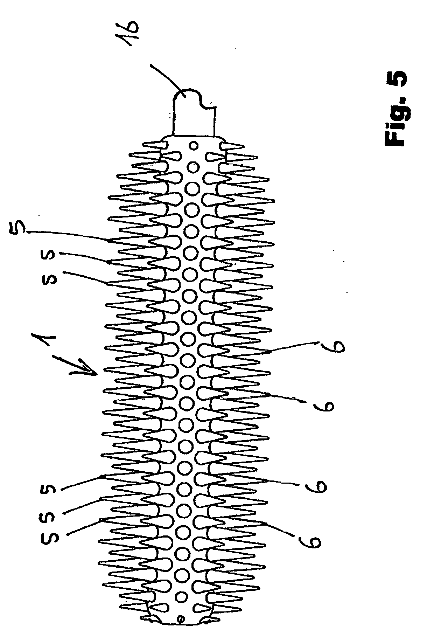

Einen solchen Applikator hat man sich so vorzustellen, dass er entlang des gesamten Borstenträgerrohrs 3 mit Borsten besetzt ist, die üblicherweise in einem geordneten Muster an dem Borstenträger 3 befestigt sind und sich in radial auswärtiger Richtung von ihm weg erstrecken. Der fertige, komplett mit Borsten besetzte Applikator sieht dann beispielsweise so aus, wie das die Figur 5 zeigt. Typischerweise bilden die Borsten Borstenkränze aus Borsten, die in Umfangsrichtung entlang einer Kreisringlinie fluchtend hintereinander angeordnet sind. Ein Borstenkranz besteht vorzugsweise aus 8 bis 22 Borsten. In Längsrichtung L sind vorzugsweise 12 bis 36 Borstenkränze hintereinander angeordnet. Benachbarte Borstenkränze können leicht versetzt relativ zueinander sein, so wie es Figur 5 veranschaulicht. Es ist z. B. eine bevorzugte Ausführungsart, in Richtung der Längsachse L aufeinanderfolgende Borstenkränze derart versetzt zueinander zu positionieren, dass immer eine Borste des nachfolgenden Borstenkranzes genau mittig in einer Lücke zwischen in Umfangsrichtung unmittelbar benachbarten Borsten steht.

Das erfindungsgemäß zum Einsatz kommende Borstenträgerrohr 3 besteht üblicherweise aus einem vergleichsweise festen Kunststoff, also einem Kunststoff, der weniger elastisch ist als der Kunststoff oder die Kunststoffe, die für die Borsten verwendet werden.

Das Borstenträgerrohr 3 ist idealerweise rund, besitzt also einen kreiszylindrischen Querschnitt. Ein solches, rundes Borstenträgerrohr lässt sich am einfachsten so in eine Spritzgussform einlegen, dass es sich unter dem Einfluss des Druckes, mit dem die Kunststoffmassen in sein Inneres eingespritzt werden, dicht an den Innenumfang der aufnehmenden Spritzgussform anlegt. Auf diese Art und Weise wird sichergestellt, dass in der Umgebung der Durchbrüche, die sich die in das Borstenträgerrohr eingespritzten Kunststoffmassen durch die Wand des Borstenträgerrohrs bahnen, praktisch keine Kunststoffmasse in den Bereich zwischen dem Außenumfang des Borstenträgerrohrs und dem Innenumfang der Spritzgussform eindringt. Alternativ kann das Borstenträgerrohr 3 aber auch einen polygonalen, zum Beispiel sechs-, acht- oder zehneckigen oder einen elliptischen Querschnitt besitzen. Die erfindungsgemäßen Borstenträgerrohre bilden eine Längsachse L aus, wie sie die Figuren 1 und 2 veranschaulichen.

Das Besondere an dem Borstenträgerrohr 3 ist gemäß der Erfindung, dass es eine Trennwand 4 besitzt, die den von der Außenwand des Borstenträgerrohrs 3 umschlossenen Innenraum in mindestens eine erste Kammer 7 und mindestens eine zweite Kammer 8 unterteilt. Typischerweise ist die Außenwand 11 des Borstenträgerrohrs 3 dünner als die Trennwand 4, d. h. es gilt vorzugsweise, dass die Dicke d_{A} der Außenwand 11 0,3 mm bis 0,8 mm beträgt. Die Dicke d_{T} der Trennwand 4 ist vorzugsweise mindestens doppelt so groß.

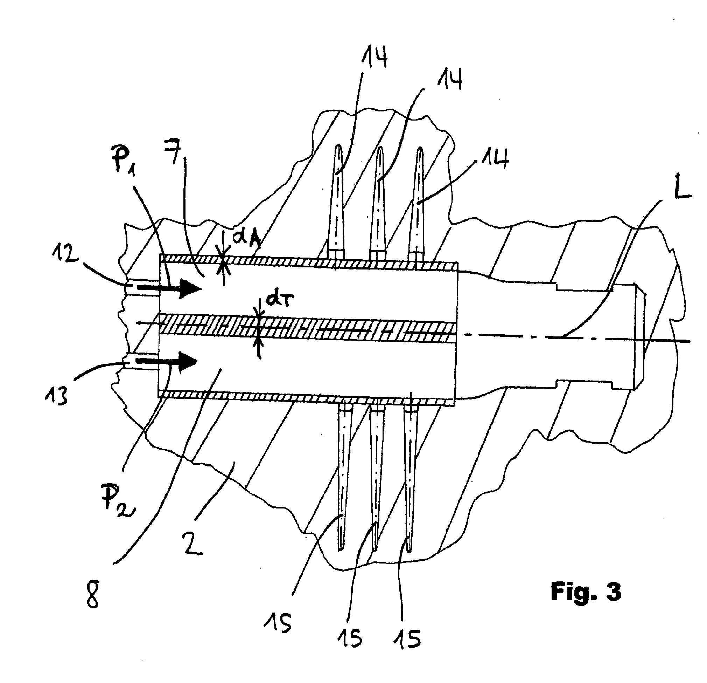

Warum das Borstenträgerrohr 3 durch die Trennwand 4 in mindestens zwei Kammern 7 und 8 unterteilt wird, erschließt sich bei näherer Betrachtung der Figuren 3 und 4, die nun erfolgen soll.

Die Figur 3 zeigt einen Ausschnitt aus einer Spritzgussform 2 im Bereich ihrer die erfindungsgemäße Bürste 1 ausformenden Kavität. Diese Spritzgussform 2 ist typischerweise mehrteilig. Um die fertiggespritzte Bürste ausformen zu können, ohne dass ihre Borsten abreißen, ist die Spritzgussform vorzugsweise so segmentiert wie eine in einzelne Stücke geschnittene Torte. Die einzelnen, tortenstückartig ausgebildeten Segmente der Spritzgussform lassen sich in radialer Richtung nach außen auseinanderfahren.

Die Figur 3 zeigt die Spritzgussform zu Beginn eines Einspritzvorganges, d. h. in dem Moment, in dem erstmals Kunststoffmasse in die Formkavität eingespritzt wird, wobei noch keine nennenswerte Menge an Kunststoffmasse in die Formkavität gelangt ist. Man erkennt, dass vor dem Schließen der Form in dem Bereich, der bei geschlossener Form die Formkavität bildet, welche den Borstenträger ausformt, ein Borstenträgerrohr 3 eingelegt worden ist, was nun, bei geschlossener Form, vollständig von der Formkavität umschlossen wird. Das Borstenträgerrohr 3 liegt so in der Formkavität, dass es die von der zentralen Formkavität abzweigenden, borstenbildenden Kavitäten 14, 15 abdichtet, so dass nicht ohne weiteres Kunststoffmasse in diese borstenbildenden Formkavitäten 14, 15 vom Inneren des Borstenträgerrohrs 3 her hineingelangen kann. Wie man sieht, liegt das Borstenträgerrohr 3 mit seinen beiden Stirnseiten jeweils dichtend an einer Stirnfläche der Formkavität bzw. an einem Absatz der Formkavität an. Dies trägt dazu bei, dass keine Kunststoffmasse an dem Borstenträgerrohr 3 vorbei bis in den Bereich der borstenbildenden Kavitäten gelangen kann, ohne die Wand des Borstenträgerrohrs zu durchbrechen.

Bemerkenswert ist noch, dass die borstenbildenden Kavitäten 14, 15 bei diesem Ausführungsbeispiel unterschiedlich gestaltet sind, es gibt erste borstenbildende Kavitäten 14, die kompaktere Borsten ausformen, und zweite borstenbildende Kavitäten 15, die vorzugsweise schlankere, längere Borsten ausformen. In der Figur 3 rechts dargestellt schließt sich an den Bereich der Formkavität, der das Borstenträgerrohr 3 aufnimmt, ein weiterer Abschnitt der Kavität an, der den späteren Kupplungsabschnitt 16 des fertigen Applikators ausbildet, vgl. Figur 4.

Ebenfalls gut anhand der Figur 3 zu erkennen sind der hier nur grob vereinfacht dargestellte erste Einspritzkanal 12 und der zweite Einspritzkanal 13. Jeder dieser beiden Einspritzkanäle ist relativ zum Borstenträgerrohr 3 so angeordnet, dass er unmittelbar nur mit einer Kammer des Borstenträgerrohrs 3 kommuniziert, bei diesem Ausführungsbeispiel nämlich der ersten Kammer 7 und der zweiten Kammer 8. Es ist also so, dass die mit Hilfe des ersten Einspritzkanals 12 eingespritzte Kunststoffmasse nicht unmittelbar, d. h. ohne die erste Kammer 7 zu passieren, bis in die zweite Kammer 8 hineingelangen kann. Sinngemäß ebenso verhält es sich in Bezug auf den zweiten Einspritzkanal 13 und die zweite Kammer 8.

Die Pfeile P1 und P2 symbolisieren die Front der einschießenden Kunststoffmassen. Die von dem Pfeil P1 symbolisierte Kunststoffmasse unterscheidet sich vorzugsweise von der vom Pfeil P2 symbolisierten Kunststoffmasse durch ihre Farbe und/oder ihre Werkstoffeigenschaften. Typischerweise besitzen die beiden Kunststoffmassen eine unterschiedliche Elastizität. Im Regelfall ist eine Kunststoffmasse elastischer als die andere. Typischerweise ist eine der Kunststoffmassen vergleichsweise hart (im abgekühlten Zustand) und bildet daher Zinken aus, die sich von den übrigen Borsten dadurch unterscheiden, dass sie nur so geringfügig nachgeben, dass mit ihrer Hilfe Wimpern oder andere zu behandelnde keratinische Fasern gekämmt und separiert werden können.

Alle Kunststoffmassen werden zeitgleich und möglichst unter dem gleichen Druck in die jeweiligen Kammern des Borstenträgerrohrs eingespritzt. Auf diese Art und Weise füllen sie im Wesentlichen gleichzeitig beide Kammern 7 und 8 auf und treffen sich anschließend in dem Bereich der Kavität, die später den Kupplungsabschnitt 16 bildet. Hier mögen sich die beiden Kunststoffmassen in gewisser Weise vermischen, was jedoch der Funktion des Kupplungsabschnitts 16, nämlich seiner Aufgabe, einen formschlüssigen Halt in einem Stiel oder einem Griff zu vermitteln, keinen Abbruch tut. Bei richtiger Wahl des Einspritzdrucks und der Einspritzgeschwindigkeit sowie der Einspritzmenge kommt es jedoch im Bereich der Kammern 7 und 8 nicht zu einer Vermischung der beiden Kunststoffmassen. Dies ist der entscheidende, erfindungswesentliche Punkt - die beiden Kammern erfüllen ihre erfindungsgemäß vorgesehene Aufgabe, die beiden Kunststoffmassen in dem Bereich zu trennen, wo es darauf ankommt. Welche Einspritzparameter (Einspritzzeit, Einspritzgeschwindigkeit, Einspritzdruck, Einspritzmenge) zu wählen sind, hängt vom individuellen Einzelfall ab, kann aber durch fachübliche Versuche leicht ermittelt werden. Spätestens sobald alle Kammern und der an sie anschließende, später den Kupplungsabschnitt 16 formende Bereich der Kavität ausgefüllt sind, kommt es zur sogenannten "Moltrusion®". Darunter versteht man den Vorgang, dass der Druck innerhalb des Borstenträgerrohrs 3 so groß wird, dass die Kunststoffmasse die dünne Außenwand des Borstenträgerrohrs 3 von innen durchbricht und zwar örtlich genau in jenen Bereichen, in denen an der Außenseite des Borstenträgerrohrs 3 eine bisher noch nicht gefüllte Kavität liegt, die zur Ausbildung der Borsten bestimmt ist.

Auf diese Art und Weise schießt die jeweilige Kunststoffmasse durch die Wand des Borstenträgerrohrs 3 hindurch in die borstenbildenden Kavitäten ein und erstarrt dort. Somit bilden die unterschiedlichen Kunststoffmassen nach dem Erstarren einen oder mehrere, das Innere des Borstenträgerrohrs ausfüllende, Kunststoffkörper, der bzw. die mit den Borsten eins sind.

Der entscheidende Punkt ist nun der, dass die Trennwand 4 des Borstenträgerrohrs 3 genau in diesem Bereich, in dem sich die Borsten bilden, verhindert, dass die sich in den einzelnen Kammern befindlichen, vorzugsweise unterschiedlichen Kunststoffmassen miteinander vermischen.

Somit ist es möglich, dass all diejenigen borstenbildenden Kavitäten, die im Bereich einer Kammer liegen, ausschließlich mit dem Kunststoff gefüllt werden, der in diese Kammer eingespritzt wurde, während alle borstenbildenden Kavitäten, die unmittelbar in dem Bereich einer anderen Kammer liegen, ausschließlich mit der Kunststoffmasse ausgefüllt werden, die in diese zweite Kammer eingespritzt worden ist. Auf diese Art und Weise lässt sich also eine Bürste mit einem vorzugsweise in Umfangsrichtung vollständig in sich geschlossenen Borstenfeld erzeugen, das aus unterschiedlichen Borsten besteht. Beispielsweise kann ein Borstenfeld erzeugt werden, das aus Borsten eines ersten Kunststoffs und gleichzeitig aus Borsten eines zweiten Kunststoffs besteht. Die Anwenderin kann auf diese Art und Weise durch Drehen der Bürste bzw. des Applikators auswählen, mit welchem Teil des Borstenfeldes sie beispielsweise die Mascaramasse applizieren möchte, und kann sich für den Teil des Borstenfeldes entscheiden, der aus härteren Borsten gebildet wird oder für den Teil des Borstenfeldes, der aus weicheren Borsten gebildet wird.

Bei der Wahl des Einspritzdruckes ist darauf zu achten, dass zwischen den unterschiedlichen Kammern des Borstenträgerrohrs jedenfalls während der Phase, in der die Kunststoffmassen in die ihnen zugeordneten, borstenbildenden Kavitäten einschießen, kein zerstörerischer Druckunterschied herrscht.

Dies ist aus folgendem Grund wichtig: Sobald zwischen zwei Kammern (zum Beispiel 7 und 8) ein signifikanter Druckunterschied herrscht, zerstört die heiße Kunststoffmasse, die in die Kammer mit dem höheren Druck einschießt, unter Umständen vorzeitig die Trennwand 4. Hierdurch kann die zunächst unter dem höheren Druck stehende Kunststoffmasse unter ungünstigen Umständen bis in die borstenbildenden Kavitäten hineingelangen, für die sie nicht vorgesehen ist.

Aus diesem Grund ist es auch so, dass die Wandstärke d_{T} der Trennwand entsprechend dicker gewählt wird als die Wandstärke d_{A} der Außenwand, die gezielt durchbrochen werden soll.

Dabei ist es nicht zwingend erforderlich, dass die Trennwand bis zum Ende des Spritzgussvorgangs stabil bleibt. Es kann genügen, dass die Trennwand erst dann kollabiert, wenn in die borstenbildenden Kavitäten bereits der überwiegende Teil der für sie bestimmten Kunststoffmasse eingeschossen ist, so dass die nach dem Kollabieren der Trennwand unvermeidliche Vermischung der Kunststoffmassen im Wesentlichen nur noch im Kern des Borstenträgers stattfindet, das heißt im Inneren des Borstenträgerrohrs.

Selbstverständlich besteht die Möglichkeit, ein Borstenfeld auch aus mehr als nur zwei unterschiedlichen Borstentypen zu bilden, nämlich beispielsweise aus drei oder vier unterschiedlichen Borstentypen.

Zu diesem Zweck wird das Borstenträgerrohr 3 in mehrere, beispielsweise drei, Kammern unterteilt oder in vier Kammern, wie das die Figur 2 zeigt. Dies lässt sich ganz einfach durch mehrere Trennwände bewerkstelligen, etwa vier Trennwände, die sternförmig auseinanderlaufen, so wie das die Figur 2 zeigt. Auch hier gilt wieder, dass die Trennwände vorzugsweise eine dickere Wandstärke haben als die Außenwand 11 des Borstenträgerrohrs 3. Ein willkommener Nebeneffekt von sternförmig angeordneten Trennwänden 4, wie sie beispielsweise die Figur 2 zeigt, ist die Tatsache, dass sich die Trennwände gegenseitig stabilisieren. Die vier Trennwände des von Figur 2 gezeigten Borstenträgerrohrs bilden eine erste Kammer 7, eine zweite Kammer 8, eine dritte Kammer 9 und eine vierte Kammer 10.

Auf diese Art und Weise können insgesamt max. vier unterschiedliche Borstentypen erzeugt werden, beispielsweise drei Borstentypen mit unterschiedlicher Elastizität und ein vierter Borstentyp mit einer wesentlich geringeren Elastizität, der zum Kämmen geeignet ist bzw. der sogar so unelastisch ist, dass er Kammzinken bildet.

Im Regelfall wird es bei jedem der Ausführungsbeispiele so sein, dass sich die zumindest eine erfindungsgemäß vorgesehene Trennwand in Längsrichtung des Borstenträgerrohrs gesehen durch den gesamten Innenraum des Borstenträgerrohrs hindurch erstreckt. Auf diese Art und Weise lässt sich eine besonders zuverlässige Trennung der in die unterschiedlichen Kammern eingespritzten Kunststoffmassen erreichen.

Der Vollständigkeit halber ist zu erwähnen, dass das Borstenträgerrohr vorzugsweise als zunächst endloses Kunststoffteil extrudiert wird. Anschließend wird es in maßgenaue Stücke abgelängt, die dann ihrerseits in die jeweilige Formkavität eingelegt werden können. Auf diese Art und Weise lassen sich auch Borstenträgerrohre mit mehreren bzw. vielen Kammern effizient und preisgünstig herstellen.

Selbstverständlich ist es kein Muss, ein solches Borstenträgerrohr zu verwenden, das an beiden Stirnseiten offen ist. Stattdessen ist es auch möglich, ein Borstenträgerrohr zu verwenden, das beispielsweise durch Spritzgießen hergestellt worden ist und das bereits einen angeformten Kupplungsabschnitt 16 besitzt und daher nur an einer seiner Stirnseiten offen ist.

Sehr vorteilhaft ist, dass die spritzgegossenen Borsten durch das schlagartige Durchbrechen der Wand des Borstenträgerrohrs von innen her sehr vorteilhafte Eigenschaften erlangen, da sich die Molekülketten der nach dem Durchbrechen schlagartig in die borstenbildende Kavität einschießende Kunststoffmasse stark in Längsrichtung orientieren und auf diese Art und Weise Borsten bilden, die besonders gute Anwendungseigenschaften haben, vergleichbar mit den Anwendungseigenschaften von gesponnenen Borsten. Zu nennen ist hier vor allen Dingen der hervorragende Wiederaufrichteffekt (bend recovery) und die von Haus aus stark federnde Wirkung.

### Bezugszeichenliste

- 1: Bürste bzw. Applikator
- 2: Spritzgussform
- 3: Borstenträgerrohr
- 4: Trennwand
- 5: erste Borsten
- 6: zweite Borsten
- 7: erste Kammer
- 8: zweite Kammer
- 9: dritte Kammer
- 10: vierte Kammer
- 11: Außenwand des Borstenträgerrohrs
- 12: erster Einspritzkanal
- 13: zweiter Einspritzkanal
- 14: erste borstenbildende Kavität der Spritzgussform
- 15: zweite borstenbildende Kavität der Spritzgussform
- 16: Kupplungsabschnitt
- 17: Kunststoffkörper, der das Innere des Borstenträgerrohrs ausfüllt
- L: Längsachse
- P₁: Einspritzung erste Kunststoffmasse
- P₂: Einspritzung zweite Kunststoffmasse
- d_{A}: Dicke Außenwand
- d_{T}: Dicke Trennwand

## Patentansprüche

1. Bürste (1) mit einem Borstenträgerrohr (3) und einem Besatz aus spritzgegossenen Borsten (5 und 6), die an dem Borstenträgerrohr festgelegt sind, sich durch die Außenwand (11) des Borstenträgerrohrs hindurcherstrecken und mit einem Kunststoffkörper eins sind, der zumindest einen Teil des Inneren des Borstenträgerrohrs ausfüllt, **dadurch gekennzeichnet, dass** das Borstenträgerrohr (3) in seinem Inneren mindestens eine Trennwand (4) aufweist, die das Innere des Borstenträgerrohrs in voneinander getrennte Kammern (7 und 8 bzw. 7, 8, 9 und 10) unterteilt.

2. Bürste (1) nach Anspruch 1, **dadurch gekennzeichnet, dass** das Borstenträgerrohr (3) in seinem Inneren mehrere Trennwände aufweist, die das Innere des Borstenträgerrohrs (3) in mehr als zwei voneinander getrennte Kammern (7, 8, 9 und 10) unterteilen.

3. Bürste (1) nach einem der vorhergehenden Ansprüche, **dadurch gekennzeichnet, dass** sich die zumindest eine Trennwand (4) in Längsrichtung (L) des Borstenträgerrohrs (3) gesehen durch den gesamten Innenraum des Borstenträgerrohrs erstreckt.

4. Bürste (1) nach einem der vorhergehenden Ansprüche, **dadurch gekennzeichnet, dass** die Dicke (d_{T}) der mindestens einen Trennwand (4) größer ist, als die Dicke (d_{A}) der Außenwand des Borstenträgerrohrs.

5. Bürste (1) nach einem der vorhergehenden Ansprüche, **dadurch gekennzeichnet, dass** zumindest ein Teil der Borsten der Bürste spritzgegossene Borsten (5, 6) sind, deren Molekülketten jene charakteristische Ausrichtung zeigen, die entsteht, wenn die später die Borsten ausbildende Kunststoffschmelze unter Druck in das Innere des Borstenträgerohrs eingespritzt wird und dabei die Außenwand des Borstenträgers durchdringt, um in die borstenbildenden Kavitäten der Spritzgussform einzutreten.

6. Bürste (1) nach einem der vorhergehenden Ansprüche, **dadurch gekennzeichnet, dass** zumindest zwei der durch die mindestens eine Trennwand (4) abgegrenzten Kammern (7 und 8) mit unterschiedlichem Kunststoffmaterial ausgespritzt sind.

7. Bürste (1) nach einem der vorhergehenden Ansprüche, **dadurch gekennzeichnet, dass** das Borstenträgerrohr (3) ein an seinen beiden Stirnseiten offenes Rohr ist.

8. Bürste (1) nach einem der vorhergehenden Ansprüche, **dadurch gekennzeichnet, dass** sich an eine Stirnseite des Borstenträgerrohrs (3) ein Kupplungsabschnitt (16) anschließt, mit dessen Hilfe das Borstenträgerrohr (3) an einem Stiel oder einem Griff festgesetzt werden kann, wobei der Kupplungsabschnitt integraler Bestandteil eines Kunststoffkörpers ist, der auch mindestens eine der mehreren Kammern ausfüllt.

9. Bürste (1) nach einem der vorhergehenden Ansprüche, **dadurch gekennzeichnet, dass** das Borstenträgerrohr (3) ein Abschnitt eines stranggepressten Profils ist.

10. Verfahren zur Herstellung einer Bürste nach einem der vorhergehenden Ansprüche, **dadurch gekennzeichnet, dass** zunächst ein Borstenträgerrohr aus einem ersten Kunststoff hergestellt wird, wobei in einem zweiten Schritt mindestens zwei durch eine Trennwand im Inneren des Borstenträgerrohrs gebildete Kammern mit - vorzugsweise einem zweiten und einem dritten - Kunststoff ausgespritzt werden, wobei der Einspritzdruck jeweils so hoch eingestellt wird, dass der zum Ausspritzen der jeweiligen Kammer eingesetzte Kunststoff die Außenwand des Borstenträgerrohrs dort lokal durchbricht, wo sich auf der Außenseite eine zunächst noch leere borstenbildende Kavität anschließt, die sodann durch den Kunststoffstrahl, der den Durchbruch in der Außenwand des Borstenträgerrohrs von innen her passiert, ausgefüllt wird.

11. Verfahren nach Anspruch 10, **dadurch gekennzeichnet, dass** in eine erste und eine zweite durch eine Trennwand in Längsrichtung voneinander getrennte Kammer gleichzeitig und unter dem gleichen Druck an der ersten Stirnseite des Borstenträgerrohrs unterschiedliche Kunststoffe eingespritzt werden, die das Borstenträgerrohr an dessen zweiter Stirnseite teilweise wieder verlassen, um dort gemeinsam einen Kupplungsabschnitt auszubilden, der sich in Längsrichtung an das Borstenträgerrohr anschließt und nach dem Erstarren der Schmelzen an diesem festgelegt ist, da er einstückig mit den Kunststoffkernen, die die erste und die zweite Kammer ausfüllen, verbunden ist.

## Claims

1. Brush (1) with a bristle carrier tube (3) and a coating of injection-moulded bristles (5 and 6), which have been fixed on the bristle carrier tube, extend through the outer wall (11) of the bristle carrier tube and are one with a plastic body which at least fills in a part of the interior of the bristle carrier tube, wherein the bristle carrier tube (3) manifests at least one separating wall (4) in its interior, which divides the interior of the bristle carrier tube into chambers separated from one another (7 and 8 or 7, 8, 9 and 10).

2. Brush (1) according to Claim 1, wherein the bristle carrier tube (3) manifests a plurality of separating walls in its interior which divide the interior of the bristle carrier tube (3) into more than two chambers separated from one another (7, 8, 9 and 10).

3. Brush (1) according to one of the above claims wherein the at least one separating wall (4) extends through the entire interior of the bristle carrier tube looking in the longitudinal direction (L) of the bristle carrier tube (3).

4. Brush (1) according to one of the above claims wherein the thickness (d_{T}) of the at least one separating wall is larger than the thickness (D_{A}) of the outer wall of the bristle carrier tube.

5. Brush (1) according to one of the above claims wherein at least one part of the bristles of the brush are injection-moulded bristles (5, 6), the molecular chains of which show the characteristic alignment which results when the plastic melt later forming the bristles is injected into the interior of the bristle carrier tube under pressure and, in this context, penetrates the outer wall of the bristle carrier, in order to enter into the bristle-forming cavities of the injection mould.

6. Brush (1) according to one of the above claims wherein at least two of the chambers (7 and 8) demarcated by the at least one separating wall (4) have been lined with differing plastic material.

7. Brush (1) according to one of the above claims wherein the bristle carrier tube (3) is a tube which is open on its two front sides.

8. Brush (1) according to one of the above claims wherein a coupling section (16) connects onto one front side of the bristle carrier tube (3), with the help of which section the bristle carrier tube (3) can be fitted onto a handle or a holder, in which context the coupling section is an integral component of a plastic body which also fills in no less than one of the plurality of chambers.

9. Brush (1) according to one of the above claims wherein the bristle carrier tube (3) is a section of an extruded profile.

10. Method for the production of a brush according to one of the above claims wherein to start with a bristle carrier tube is manufactured from a first plastic, in which context at least two chambers formed in the interior of the bristle carrier tube by a separating wall are lined with - preferably a second and a third - plastic in a second step, with the injection pressure being set in each case so high that the plastic used to line the chamber in question locally breaks through the outer wall of the bristle carrier tube where a bristle-forming cavity, which is as yet empty to start with, connects on the outside, then being filled out by the jet of plastic, which passes the breakthrough in the outer wall of the bristle carrier tube from the inside.

11. Method according to Claim 10, wherein differing plastics are injected into a first and a second chamber separated from one another in a longitudinal direction by a separating wall simultaneously and under the same pressure on the first front side of the bristle carrier tube, these plastics then partly leaving the bristle carrier tube again on its second front side, in order to form a coupling section there jointly, the latter connecting onto the bristle carrier tube in a longitudinal direction and being fitted to it following rigidity of the melts, as it is connected with the plastic cores, which fill out the first and the second chamber, in one piece.

## Revendications

1. Brosse (1) avec un tube support de brosse (3) et une garniture de poils moulés par injection (5 et 6) qui sont fixés sur le tube support de brosse, traversent la paroi extérieure (11) du tube support de brosse et forment une entité avec un corps en matière synthétique qui remplit au moins une partie de l'intérieur du tube support de brosse, **caractérisée par le fait que** le tube support de brosse (3) présente, à l'intérieur, au moins une cloison (4) qui subdivise l'intérieur du tube support de brosse en compartiments séparés les uns des autres (7 et 8 et/ou 7, 8, 9 et 10).

2. Brosse (1) conformément à la revendication n°1, **caractérisée par le fait que** le tube support de brosse (3) présente, à l'intérieur, plusieurs cloisons qui subdivisent l'intérieur du tube support de brosse (3) en plus de deux compartiments séparés les uns des autres (7, 8, 9 et 10).

3. Brosse (1) conformément à l'une des revendications précédentes, **caractérisée par le fait qu'**au moins une cloison (4) s'étend, vu dans le sens longitudinal (L) du tube support de brosse (3), à travers tout l'espace intérieur du tube support de brosse.

4. Brosse (1) conformément à l'une des revendications précédentes, **caractérisée par le fait que** l'épaisseur (dₚ) au moins d'une cloison (4) est plus grande que l'épaisseur (d_{A}) de la paroi extérieure du tube support de brosse.

5. Brosse (1) conformément à l'une des revendications précédentes, **caractérisée par le fait qu'**au moins une partie des poils de la brosse sont des poils moulés par injection (5, 6), dont les chaînes moléculaires montrent une orientation caractéristique qui est générée lorsque la matière synthétique fondue, formant ultérieurement les poils, est injectée sous pression à l'intérieur du tube support de brosse et pénètre ainsi dans la paroi extérieure du support de brosse pour entrer dans les cavités du moule d'injection, formant les poils.

6. Brosse (1) conformément à l'une des revendications précédentes, **caractérisée par le fait qu'**au moins deux des compartiments (7 et 8), délimitées au moins par une cloison (4), sont moulés par injection avec des matières synthétiques différentes.

7. Brosse (1) conformément à l'une des revendications précédentes, **caractérisée par le fait que** le tube support de brosse (3) est un tube ouvert sur l'une de ses deux faces frontales.

8. Brosse (1) conformément à l'une des revendications précédentes, **caractérisée par le fait qu'**une section de couplage (16), à l'aide de laquelle le tube support de brosse (3) peut être fixé sur une tige ou une poignée, est reliée à une face frontale du tube support de brosse (3), la section de couplage faisant partie intégrante d'un corps en matière synthétique qui remplit également au moins l'un des compartiments.

9. Brosse (1) conformément à l'une des revendications précédentes, **caractérisée par le fait que** le tube support de brosse (3) est une section d'un profilé extrudé.

10. Procédé pour la fabrication d'une brosse conformément à l'une des revendications précédentes, **caractérisé par le fait qu'**un tube support de brosse est d'abord fabriqué à partir d'une première matière synthétique, moyennant quoi, dans un second temps, au moins deux compartiments formés par une cloison à l'intérieur du tube support de brosse sont moulés par injection avec - de préférence une deuxième et une troisième - matière synthétique, la pression d'injection étant réglée à un niveau tellement élevé que la matière synthétique utilisée pour l'injection de chacun des compartiments transperce localement la paroi extérieure du tube support de brosse, où est reliée sur la face extérieure une cavité formant des poils, d'abord vide, puis remplie par le jet de matière synthétique qui traverse depuis l'intérieur la percée dans la paroi extérieure du tube support de brosse.

11. Procédé conformément à la revendication n°10, **caractérisé par le fait que**, dans un premier et un deuxième compartiment séparés par une cloison en sens longitudinal, simultanément et avec la même pression sur la première face frontale du tube support de brosse, des matières synthétiques différentes sont injectées, lesquelles quittent à nouveau partiellement le tube support de brosse au niveau de sa deuxième face frontale pour former ensemble une section de couplage qui est reliée au tube support de brosse en sens longitudinal et qui est fixée sur ce dernier après la solidification de la masse fondue étant donné qu'il est relié en une pièce aux noyaux en matière synthétique qui remplissent les premier et deuxième compartiments.
